# EUROPEAN PATENT SPECIFICATION

(11) **EP 3 657 092 B1**
(45) Date of publication and mention of the grant of the patent: **07.06.2023**
(21) Application number: 18207691.9
(22) Date of filing: 22.11.2018
(51) Int. Cl.: F24H 9/06, F16B 9/02, F16B 45/00, F16B 9/00

(54) **WATER HEATER SYSTEM**
WASSERHEIZERSYSTEM
SYSTÈME DE CHAUFFAGE D'EAU

(43) Date of publication of application: 27.05.2020
(73) Proprietor: Stiebel Eltron GmbH & Co. KG, 37603 Holzminden (DE)
(72) Inventor: LICHVARCIK, Marián, 05801 Poprad (CZ)

(56) References cited:
- EP-A2- 1 918 660
- EP-A2- 2 330 361
- AT-B- 410 367
- CN-A- 106 247 108
- FR-A1- 2 471 348
- FR-A1- 2 979 978
- US-A- 4 848 714
- US-A- 5 487 518

## Description

The present invention relates to a water heater system.

Water heaters like hot water storage tanks are well known and are typically mounted to a wall. As the water heaters can be of considerable weight, the mounting of such a water heater can be difficult for the user.

EP 1 918 660 B1 discloses a wall mounting bracket for a water heater. The wall mounting bracket can be mounted to the wall and hooks can be attached to the water heater and the water heater can then be hooked to the bracket attached to the wall. The bracket in particular comprises recesses at its top end into which the hooks attached to the water heater can be mounted.

AT410367B discloses a water heater system comprising a water heater, a wall mounting bracket having two hook receiving portions, two hooks coupled to the water heater configured to engage into the two hook receiving portions of the bracket, wherein the hook receiving portions are arranged in the wall mounting bracket without a connection to a circumference of the wall mounting bracket. This document discloses only a vertical arrangement of the water heater.

It is an object of the invention to provide a water heater system with a flexible mounting capability.

This object is achieved by a water heater system according to claim 1.

The water heater system comprises a water heater, hooks which are attached to the water heater as well as a wall mounting bracket. The wall mounting bracket can be mounted to a wall by means of screws. The wall mounting bracket comprises first holes or recesses for the screws for mounting the wall mounting bracket to the wall. The wall mounting bracket comprises hook mounting portions which are adapted to receive the hooks attached to the water heater. The hook mounting portions are closed and are not connected to the circumference of the bracket.

Instead of providing a hook mounting portion at the circumference of the bracket as shown in EP 1 918 660 B1, the hook mounting portion according to the invention is arranged inside the wall mounting bracket in such a way that the hook mounting portion is a closed portion. This is advantageous with respect to the distribution of a stress and deformation. The deformation which acts on the mounted bracket when a water heater is hooked into the hook portions is greatest at the top side of the bracket while the deformation on the hook mounting portion is significantly less for a vertical attachment of the water heater to the bracket. In case of a horizontal attachment of the water heater, only the top hook receiving portion will have an increased deformation while the lower second hook does not have significant deformation.

Thus, by changing the position of the hook mounting portion from the circumference of the bracket to the inside of the bracket, the stress distribution and deformation of the bracket can be significantly reduced thus increasing the stability of the entire water heating system when it is mounted to a wall.

Furthermore, it is much easier to first attach the wall mounting bracket to a wall using screws and only then attach the water heater to the bracket then attaching the entire water heater to a wall. Thus, the mounting of the water heater can be significantly improved. In comparison to EP1918660B1 and AT410367B the invention has the advantage that the mounting structure allows mounting the water heater either horizontally or vertically without the need for additional or different mounting parts.

Embodiments and advantages of the invention are elucidated in the following figures:
- Fig. 1: shows a schematic representation of a water heater system according to an aspect of the invention,
- Fig. 2: shows a schematic representation of a further water heater system according to an aspect of the invention,
- Fig. 3A: show different views of a fixation bracket according to an aspect of the
- to 3E: invention,
- Fig. 4A to 4D: show different views of an outer bracket according to an aspect of the invention,
- Fig. 5A to 5D: show different views of a hook according to an aspect of the invention,
- Fig. 6A to 6G: show different views of a wall mounting bracket according to an aspect of the invention,
- Fig. 7A to 7H: show different views of a wall mounting bracket according to a further aspect of the invention,
- Fig. 8A and 8B: show different views of a water heating system according to a further aspect of the invention,
- Fig. 9A: shows a schematic view of a water heater system according to an aspect of the invention,
- Fig. 9B: shows a schematic view of a water heating system according to a further aspect of the invention,
- Fig. 10A to 10C: show different views of a water heating system according to an aspect of the invention,
- Fig. 11A and 11B: show a schematic view of a water heating system according to an aspect of the invention, and
- Fig. 12A to 12C: show a schematic view of a water heating system according to a further aspect of the invention.

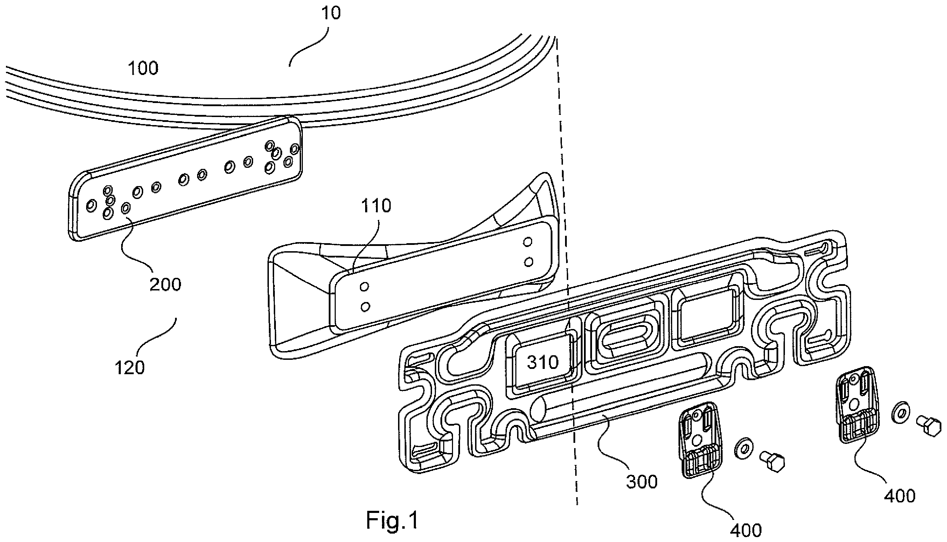

Fig. 1 shows a schematic representation of a water heater system according to an aspect of the invention. The water heating system 10 comprises a water heater 100 which can comprise an outer casing portion 110. The water heating system 10 furthermore may comprise a fixation bracket 200 which can be attached to the outer casing 110, at least two hooks 400 which can be attached to the fixation bracket 200 or the outer casing 110 as well as a wall mounting bracket 300. The wall mounting bracket 300 can be mounted to a wall and the water heater 100 with the hooks 400 can be hooked into hook mounting or receiving portions 310 of the bracket.

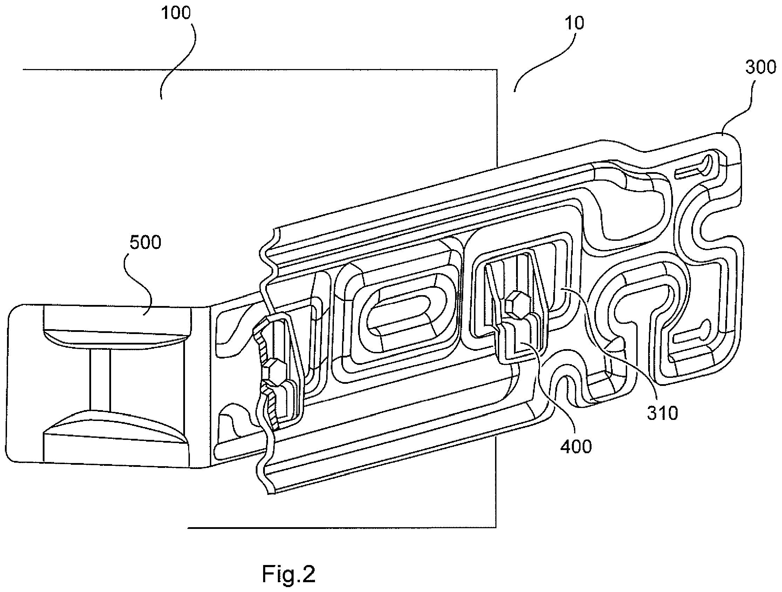

Fig. 2 shows a schematic representation of a further water heater system according to an aspect of the invention. The water heating system 10 according to the further aspect of the invention comprises an outer bracket 500 instead of an outer casing. The outer bracket 500 is attached to the housing of the water heater 100. The hooks can then be attached to the outer bracket and can be hooked into hook mounting (receiving) portions 310 of the wall mounting bracket 300.

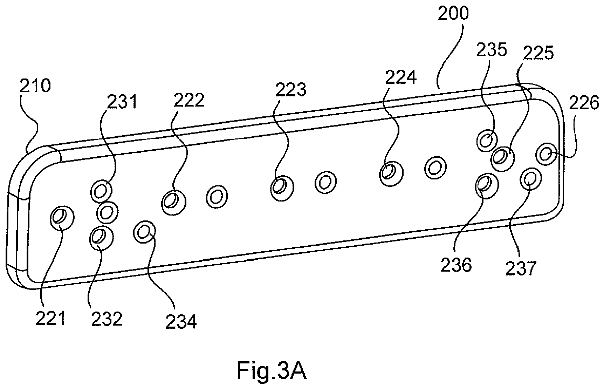

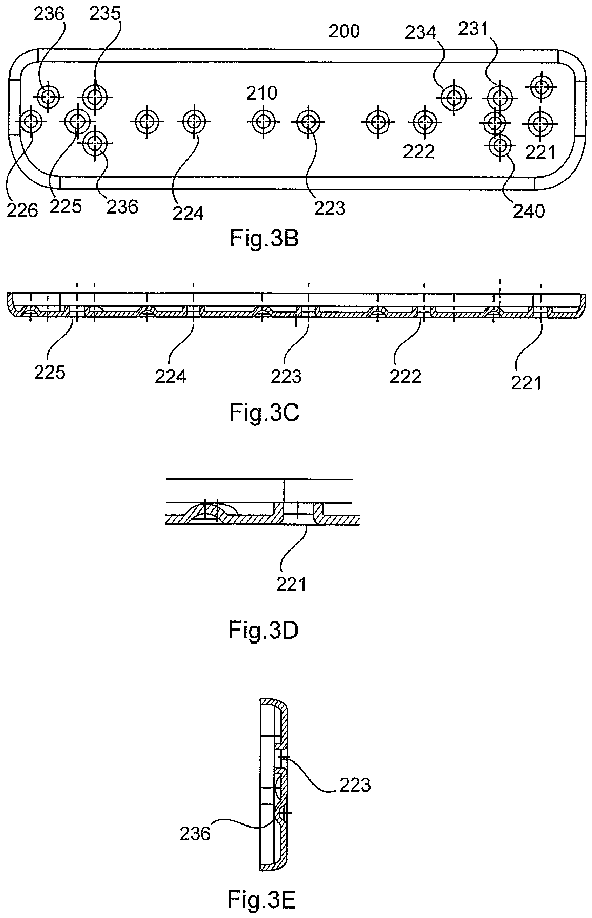

Fig. 3A to 3E show different views of a fixation bracket according to an aspect of the invention. Fig. 3A shows a schematic and perspective view of the fixation bracket 200. Fig. 3B shows a plain view of the fixation bracket. Fig. 3C shows a cross section of the fixation bracket and Fig. 3D shows an enlarged portion E of the bracket. Fig. 3E shows a cross section along the lines D - D. The fixation bracket 200 is substantially rectangular with rounded edges and is substantially flat. The fixation bracket 200 comprises a number of holes 221 - 226 in particular along a middle line of the bracket 200. Additionally, further holes 231 - 236 are provided which are not aligned with the holes 221 - 226. The holes 221 - 226 can be used to mount the bracket to different water heaters. The holes 231, 232 or 235 and 236 can be used for fixing the water heater for a vertical application. The holes 332, 334 or the holes 336, 337 can be used for fixing the water heater for horizontal application. Thus, the fixation bracket allows for a horizontal or a vertical application and enables the mounting of different water heaters.

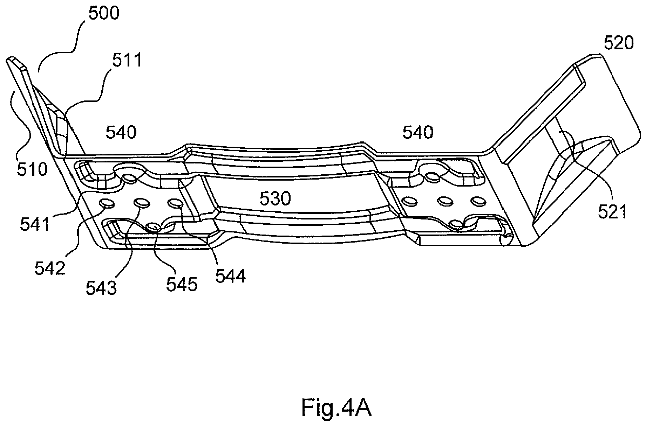

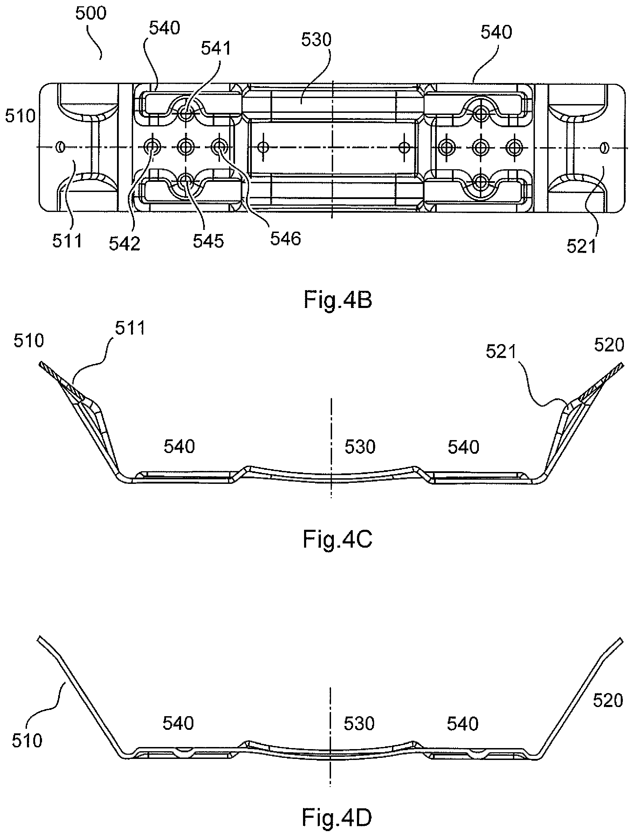

Fig. 4A to 4D show different views of an outer bracket according to an aspect of the invention. The outer bracket 500 is used for water heaters with a round housing which do not have the outer casing 110 as shown in Fig 1. The outer bracket 500 is then mounted to the housing 120. The outer bracket 500 comprises a first and second end 510, 520, a middle portion 530 and two mounting portions 540 each between the middle portion 530 and the first and second end 510, 520. The first and second end 510, 520 are angled with respect to the middle portion 530 and the mounting portions 540 such that the outer bracket can be attached to a round housing of a water heater. The first and second end 510, 520 each comprise an indentation 511, 521. These indentations can serve to increase the stability of the outer bracket. The middle portion 530 can be adapted to the outer contour of the water heater. Each mounting portion 540 comprises preferably five holes with a hole 543 in the middle. The other four holes are arranged radially as seen from the hole 543. The first and fifth hole 541, 545 can be used for a vertical arrangement of the water heater. The first and fourth hole 541, 544 can be used for a horizontal mounting of the water heater.

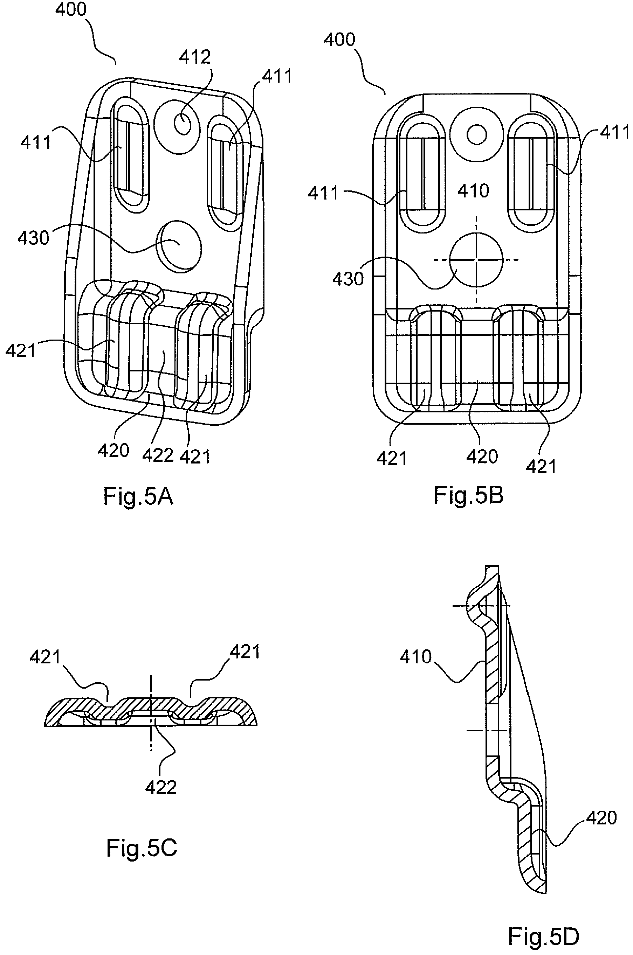

Fig. 5A to 5D show different views of a hook according to an aspect of the invention. The hook 400 comprises a first and second end 410, 420, wherein the second end 420 is spaced apart from a plain of the first end 410. The first end 410 can be attached to an outer casing 110 or an outer bracket 500 of the water heater. The hook can be attached to the water heater by a screw via the hole 430. The second end 420 is then inserted into a hook mounting portion of the wall mounting bracket 300. At the first end 410 of the hook 400, a nipple 412 can be provided which is extending towards the side of the hook which is attached to the water heater. The nipple 412 can be used for fixation and easy assembling. The first end comprises reinforcing dies 411 and the second end also comprises reinforcing dies 421. These dies are used to increase the stiffness of the hook.

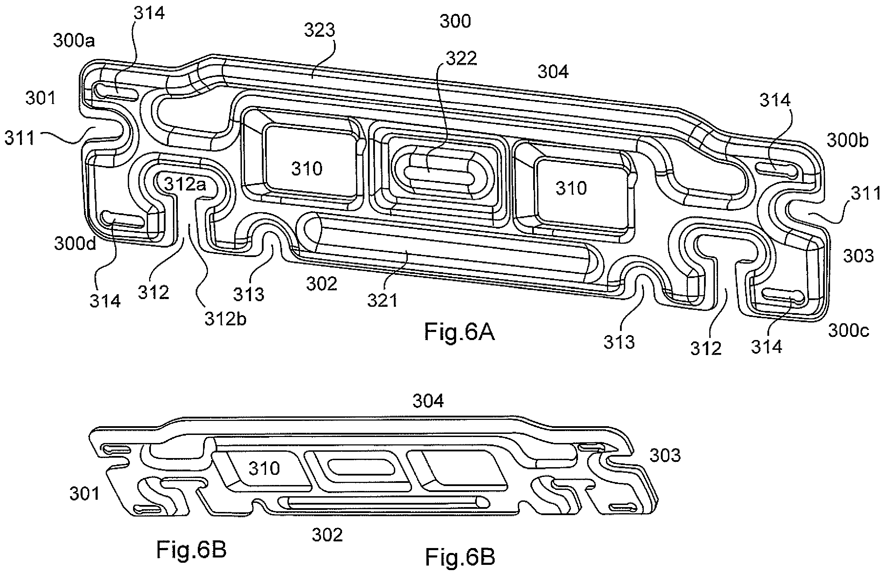

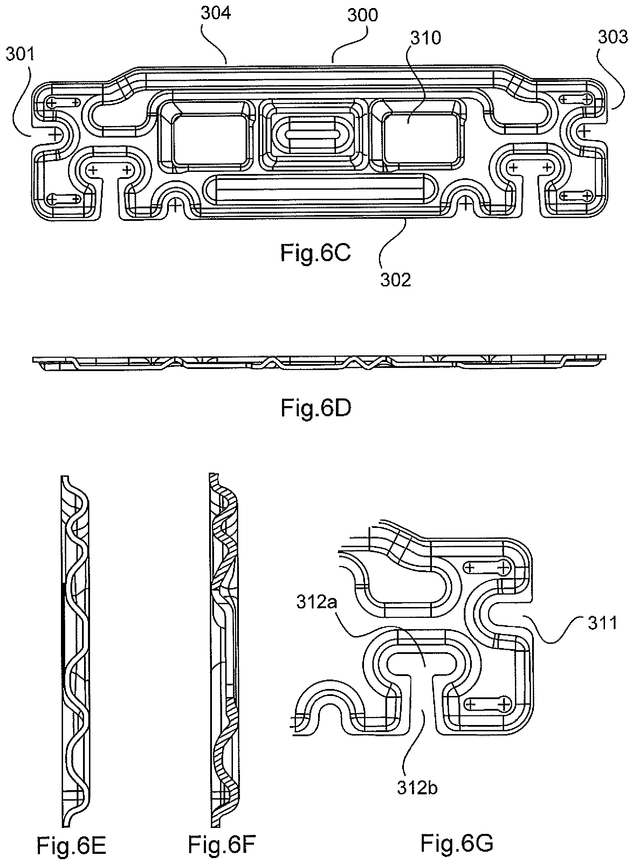

Fig. 6A to 6G show different views of a wall mounting bracket according to an aspect of the invention. Fig. 6A shows a schematic perspective view of the bracket. Fig. 6B shows a further perspective view of the bracket. Fig. 6C shows a plain view of the bracket. Fig. 6D shows a cross section along the plain E - E of the bracket, Fig. 6E shows a cross section along the lines A - A. Fig. 6F shows a cross section along the line B - B. Fig. 6G shows an enlarged detail of D. The wall mounting bracket 300 comprises a first and second end 301, 303, a lower end 302 and an upper end 304. At the first and second end 301, 302, a first recess 311 is present. At the lower end 302, second recesses 312 and third recesses 313 are provided. The second recesses 312 each comprise a long hole 312a which is substantially aligned with the lower end 302. Furthermore, the second recesses 312 comprise a recess 312b leading to the long hole 312a. Furthermore, optionally second long holes 314 can each be provided at the four corners 300a - 300d of the bracket. The hook mounting portions 310 are embodied as holes which are not connected to the circumference of the bracket 300.

The bracket 300 may optionally comprise reinforcing dies 320. A first reinforcing die 321 may be provided at the lower end 302. A further reinforcing die 322 may be provided between the two hook receiving portions 310. An additional reinforcing die 323 may be provided at the upper end 304.

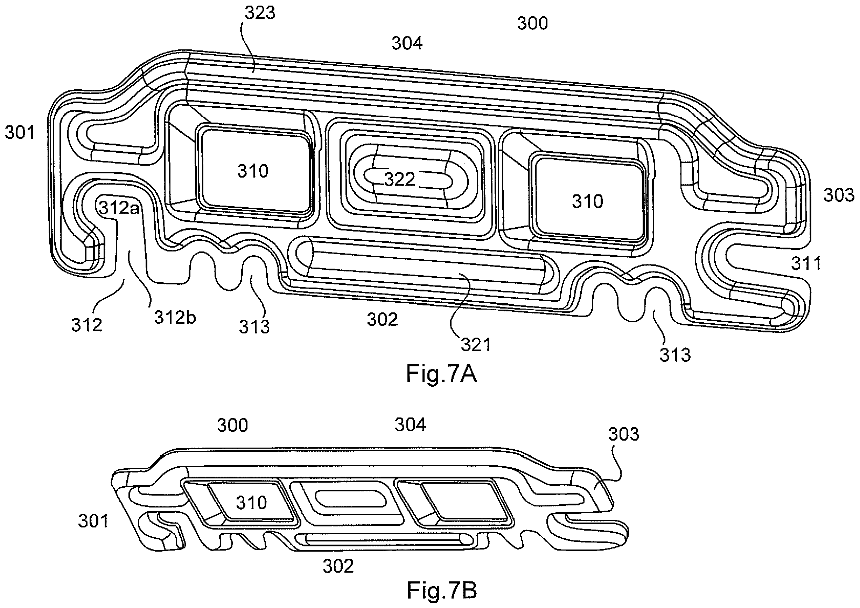

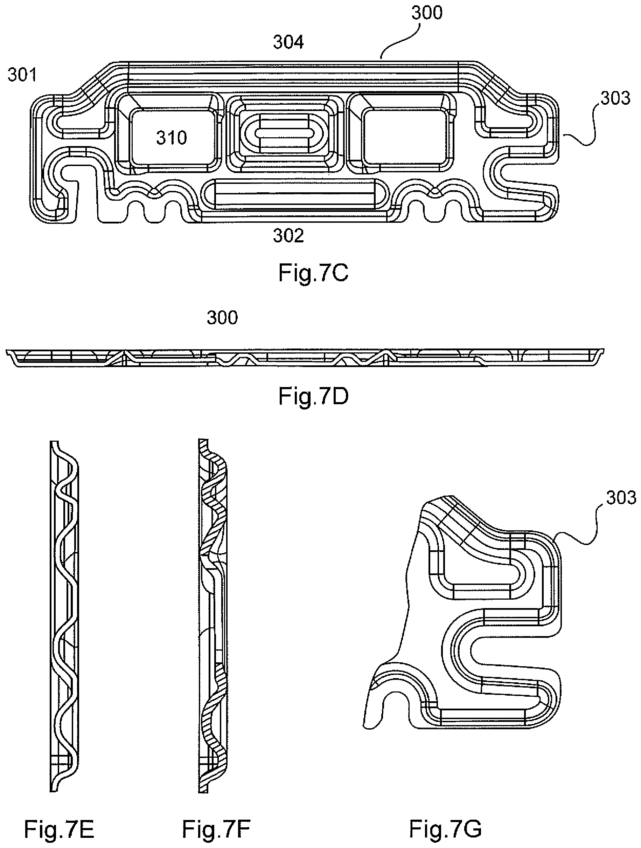

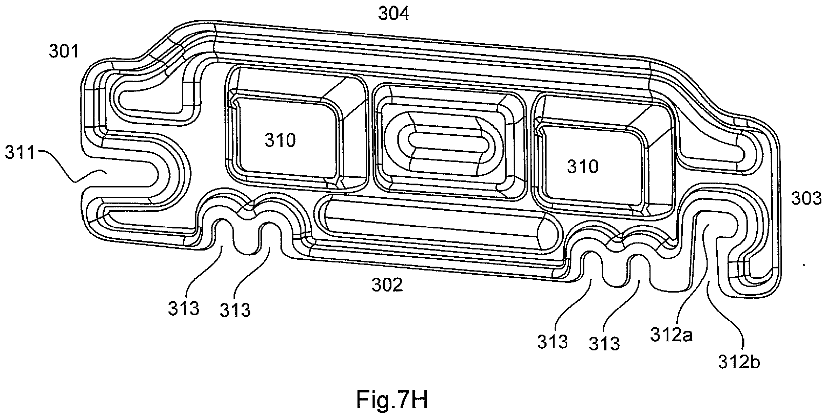

Fig. 7A to 7H show different views of a wall mounting bracket according to a further aspect of the invention. The bracket according to the aspect of Fig. 7 comprises a first and second end 301, 303, an upper end 304 and a lower end 302. A recess 311 is provided either at the first end 301 or the second end 303. The second recess 312 with a long hole 312a is either provided at the first end 301 or at the second end 303. At the lower end 302, third recesses 313 are provided. While in Fig. 6A only one recess is provided at each end, in Fig. 7A, two recesses 313 are provided. Furthermore, the bracket 300 comprises two hook receiving portions 310. Furthermore, the bracket 300 may comprise several reinforcing dies 321, 322, 323 similar to the reinforcing dies as in Fig. 6A.

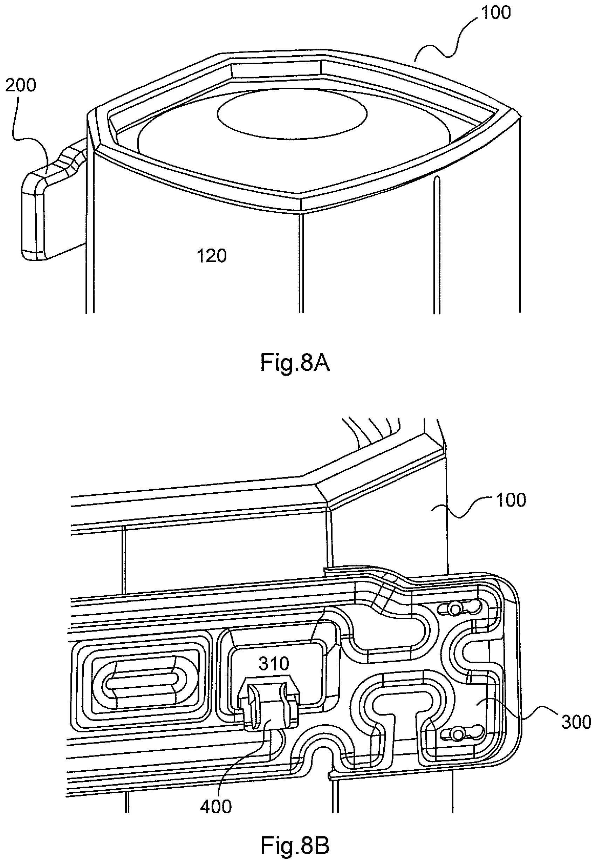

Fig. 8A and 8B show different views of a water heating system according to a further aspect of the invention. A water heater 100 with a fixation bracket 200 is depicted. A wall mounting bracket 300 (as described in Fig. 6A - 6F) is attached to the fixation bracket. In particular, the recesses or holes 314 are used to attach the bracket to the fixation bracket. A hook 400 is attached to the fixation bracket 200 and is hooked into the hook receiving portion 310.

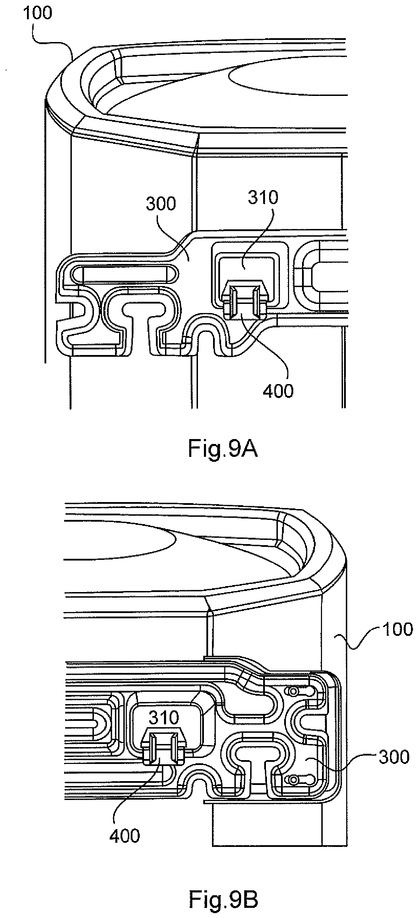

In Fig. 9A and 9B, different water heating systems are disclosed each with a different wall mounting bracket 300. However, the main feature of the wall mounting bracket is the provision of the hook receiving portion 310.

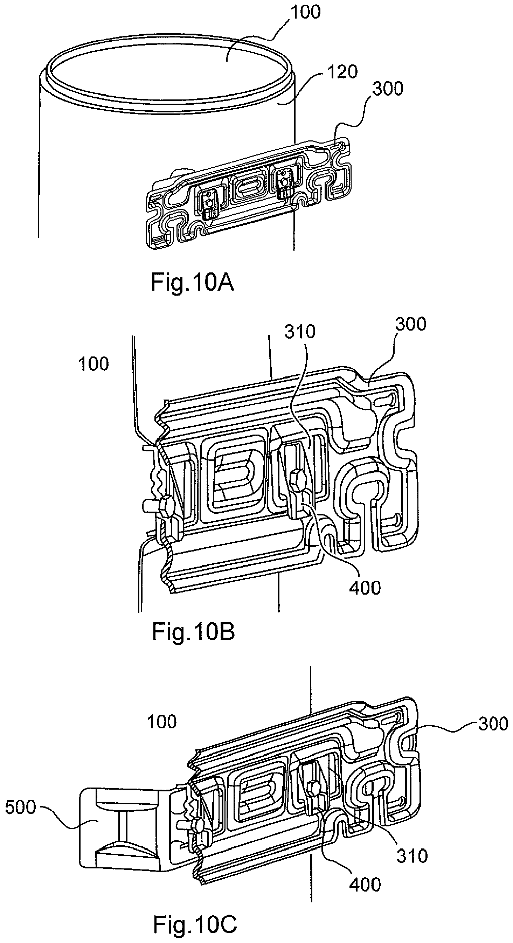

Fig. 10A to 10 C show different views of a water heating system according to an aspect of the invention. In Fig. 10A and 10B, a first variant of a round water heater is disclosed. The water heater comprises an outer casing 110 to which the wall mounting bracket 300 is attached by means of the hooks 400 which engage in the hook receiving portion 310. In Fig. 10C, a water heater 100 with an outer bracket 500 is shown. The hooks 400 are attached to the bracket 500 and the heater can be hooked by means of the hooks 400 into the hook receiving portion 310.

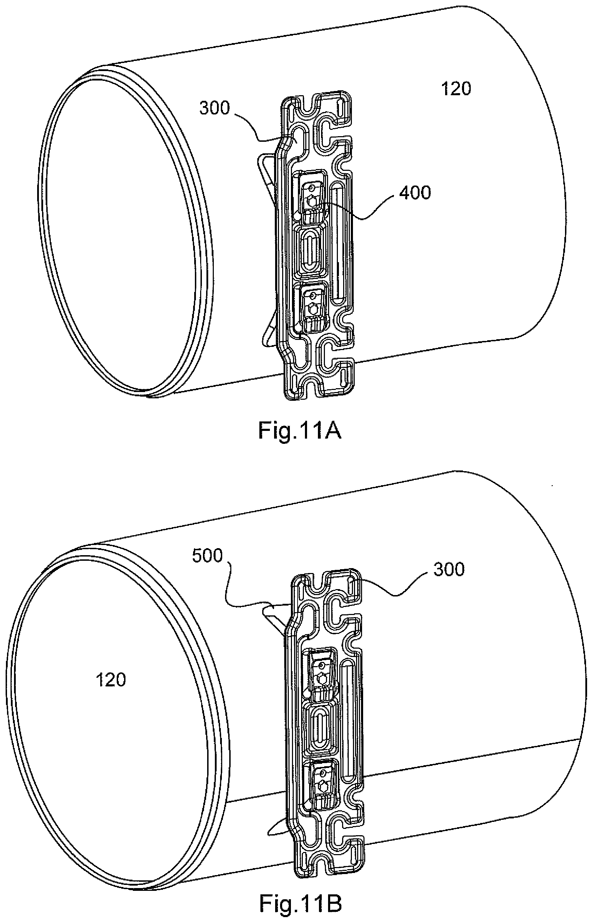

Fig. 11A and 11B show a schematic view of a water heating system according to an aspect of the invention. In Fig. 11A and 11B, the horizontal mounting of the water heater 100 with an outer casing 110 in Fig. 11A and a bracket 500 as seen in Fig. 11B is disclosed.

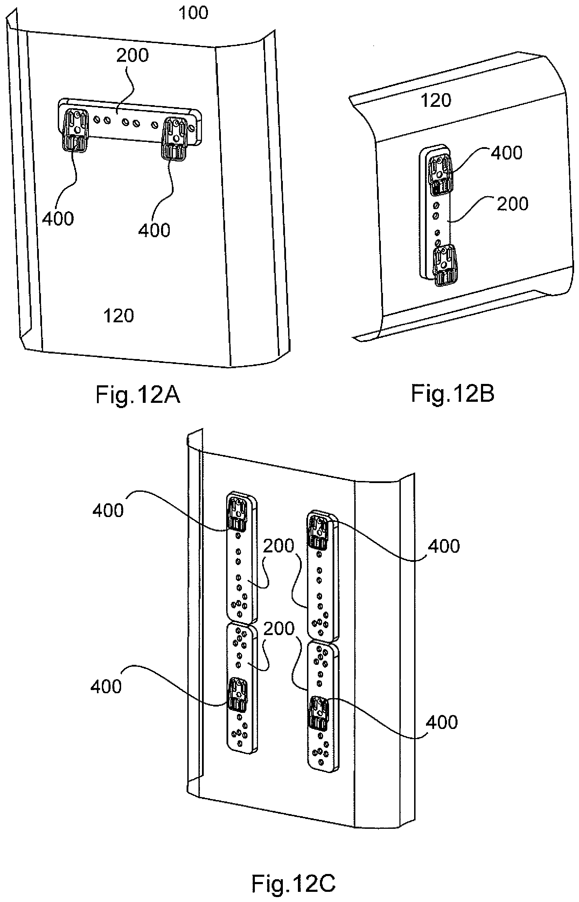

Fig. 12A to 12C show a schematic view of a water heating system according to a further aspect of the invention. In Fig. 12A to 12C, the aspect of the invention is disclosed where the water heater has a square housing. The fixation bracket 200 is attached to the housing 120 of the water heater either in a horizontal way as disclosed in Fig. 12A or in a vertical way as disclosed in Fig. 12B. As seen in Fig. 12C, several fixation brackets 200 can be provided at the housing 120 of the water heater 100.

## Claims

1. Water heater system, comprising
a water heater (100),
a wall mounting bracket (300) having at least two hook receiving portions (310),
at least two hooks (400) coupled to the water heater (100) configured to engage into the at least two hook receiving portions (310) of the wall mounting bracket (300),
wherein the hook receiving portions (310) are arranged in the wall mounting bracket (300) without a connection to a circumference of the wall mounting bracket (300), and
the water heater system further comprising
a fixation bracket (200) coupled to a housing (120) of the water heater (100),
wherein the fixation bracket (200) comprises at least two first through holes (221 - 226) arranged substantially in the middle of the fixation bracket (200), which are configured such that the fixation bracket (200) is mounted to the water heater (100), and at least two second holes (231 - 236) configured for fixing the hooks (400) to the fixation bracket (200) to allow a vertical or horizontal mounting of the water heater (100), or
an outer bracket (500) configured to be attached to a round housing (120) of the water heater, wherein the outer bracket (500) comprises a first and second end (510, 520), a middle portion (530) and two mounting portions (540), each between the middle portion (530) and the first and second end (510, 520),
wherein the at least two hook receiving portions (310) are configured to allow a vertical or horizontal mounting of the water heater (100),
wherein the at least two hooks (400) are attached to the fixation bracket (200) or to the outer bracket (500) in a way that the at least two hooks (400) engage into the at least two hook receiving portions (310) in a first direction to allow a vertical mounting of the water heater (100), or
wherein the at least two hooks (400) are attached to the fixation bracket (200) or to the outer bracket (500) in a way that the at least two hooks (400) engage into the at least two hook receiving portions (310) in a second direction being perpendicular to the first direction to allow a horizontal mounting of the water heater (100).

2. Water heater system according to claim 1, wherein the wall mounting bracket (300) comprises
at least two long holes (312a) which are each connected to the circumference of the bracket (300),
wherein the at least two long holes (312a) are configured to receive screws for mounting the wall mounting bracket (300) to a wall.

3. Water heater system according to anyone of the claims 1 to 2,
wherein the wall mounting bracket (300) comprises at least one reinforcing die (321, 323).

## Patentansprüche

1. Warmwasserbereitungssystem, umfassend:
einen Warmwasserbereiter (100),
eine Wandmontagehalterung (300), die mindestens zwei Hakenaufnahmeabschnitte (310) aufweist,
mindestens zwei Haken (400), die an den Warmwasserbereiter (100) gekoppelt sind und dazu konfiguriert sind, in die mindestens zwei Hakenaufnahmeabschnitte (310) der Wandmontagehalterung (300) einzugreifen,
wobei die Hakenaufnahmeabschnitte (310) ohne Verbindung mit einem Umfang der Wandmontagehalterung (300) in der Wandmontagehalterung (300) angeordnet sind, und
wobei das Warmwasserbereitungssystem ferner Folgendes umfasst:
eine Befestigungshalterung (200), die an ein Gehäuse (120) des Warmwasserbereiters (100) gekoppelt ist,
wobei die Befestigungshalterung (200) mindestens zwei erste Durchgangslöcher (221-226), die im Wesentlichen in der Mitte der Befestigungshalterung (200) angeordnet und derart konfiguriert sind, dass die Befestigungshalterung (200) an den Warmwasserbereiter (100) montiert ist, und mindestens zwei zweite Löcher (231-236), die zum Befestigen der Haken (400) an der Befestigungshalterung (200) konfiguriert sind, um eine senkrechte oder waagrechte Montage des Warmwasserbereiters (100) zu ermöglichen, umfasst, oder
eine äußere Halterung (500), die dazu konfiguriert ist, an einem runden Gehäuse (120) des Warmwasserbereiters angebracht zu werden, wobei die äußere Halterung (500) ein erstes und ein zweites Ende (510, 520), einen mittleren Abschnitt (530) und zwei Montageabschnitte (540) zwischen dem mittleren Abschnitt (530) und dem ersten bzw. dem zweiten Ende (510, 520) umfasst,
wobei die mindestens zwei Hakenaufnahmeabschnitte (310) dazu konfiguriert sind, eine senkrechte oder waagrechte Montage des Warmwasserbereiters (100) zu ermöglichen,
wobei die mindestens zwei Haken (400) auf derartige Weise an der Befestigungshalterung (200) oder an der äußeren Halterung (500) angebracht sind, dass die mindestens zwei Haken (400) in einer ersten Richtung in die mindestens zwei Hakenaufnahmeabschnitte (310) eingreifen, um eine senkrechte Montage des Warmwasserbereiters (100) zu ermöglichen, oder
wobei die mindestens zwei Haken (400) auf derartige Weise an der Befestigungshalterung (200) oder an der äußeren Halterung (500) angebracht sind, dass die mindestens zwei Haken (400) in einer zweiten Richtung, die zu der ersten Richtung senkrecht ist, in die mindestens zwei Hakenaufnahmeabschnitte (310) eingreifen, um eine waagrechte Montage des Warmwasserbereiters (100) zu ermöglichen.

2. Warmwasserbereitungssystem nach Anspruch 1, wobei die Wandmontagehalterung (300) Folgendes umfasst:
mindestens zwei Langlöcher (312a), die jeweils mit dem Umfang der Halterung (300) verbunden sind,
wobei die mindestens zwei Langlöcher (312a) dazu konfiguriert sind, Schrauben zum Montieren der Wandmontagehalterung (300) an einer Wand aufzunehmen.

3. Warmwasserbereitungssystem nach einem der Ansprüche 1 bis 2,
wobei die Wandmontagehalterung (300) mindestens eine Versteifungssicke (321, 323) umfasst.

## Revendications

1. Système de chauffage d'eau, comprenant
un chauffe-eau (100),
un support pour montage mural (300) qui présente au moins deux parties de réception de crochet (310),
au moins deux crochets (400) accouplés au chauffe-eau (100), conçus pour venir en prise dans les au moins deux parties de réception de crochet (310) du support pour montage mural (300),
les parties de réception de crochet (310) étant agencées dans le support pour montage mural (300) sans communication avec la circonférence du support pour montage mural (300) et
le système de chauffage d'eau comprenant en outre
un support de fixation (200) accouplé à une enveloppe (120) du chauffe-eau (100),
le support de fixation (200) comprenant au moins deux premiers trous traversants (221 - 226) agencés sensiblement au milieu du support de fixation (200) et conçus de telle manière que le support de fixation (200) est monté sur le chauffe-eau (100), et au moins deux seconds trous traversants (231 - 236) conçus pour fixer les crochets (400) au support de fixation (200) afin de permettre un montage vertical ou horizontal du chauffe-eau (100) ou
un support extérieur (500) conçu pour être relié à une enveloppe (120) ronde du chauffe-eau, le support extérieur (500) comprenant une première et une seconde extrémité (510, 520), une partie centrale (530) et deux parties de montage (540), chacune des parties de montage étant située entre la partie centrale (530) et la première et la seconde extrémité (510, 520),
les au moins deux parties de réception de crochet (310) étant conçues pour permettre un montage vertical ou horizontal du chauffe-eau (100),
les au moins deux crochets (400) étant reliés au support de fixation (200) ou au support extérieur (500) de telle manière que les au moins deux crochets (400) viennent en prise dans les au moins deux parties de réception de crochet (310) dans une première direction pour permettre un montage vertical du chauffe-eau (100) ou
les au moins deux crochets (400) étant reliés au support de fixation (200) ou au support extérieur (500) de telle manière que les au moins deux crochets (400) viennent en prise dans les au moins deux parties de réception de crochet (310) dans une seconde direction perpendiculaire à la première direction pour permettre un montage horizontal du chauffe-eau (100).

2. Système de chauffage d'eau selon la revendication 1, dans lequel le support pour montage mural (300) comprend
au moins deux trous oblongs (312a) dont chacun est en communication avec la circonférence du support (300),
les au moins deux trous oblongs (312a) étant conçus pour recevoir des vis permettant de monter le support pour montage mural (300) sur un mur.

3. Système de chauffage d'eau selon l'une quelconque des revendications 1 et 2,
dans lequel le support pour montage mural (300) comprend au moins un nervure de renfort (321, 323).
